(19) Europäisches Patentamt
European Patent Office
Office européen des brevets

(11) **EP 1 914 630 A1**

(12) **DEMANDE DE BREVET EUROPEEN**

(43) Date de publication:
**23.04.2008 Bulletin 2008/17**

(51) Int Cl.:
***G06F 9/445*** *(2006.01)*

(21) Numéro de dépôt: **08150861.6**

(22) Date de dépôt: **01.02.2002**

(84) Etats contractants désignés:
**AT BE CH CY DE DK ES FI FR GB GR IE IT LI LU MC NL PT SE TR**

(30) Priorité: **01.02.2001 FR 0101378**

(62) Numéro(s) de document de la (des) demande(s) initiale(s) en application de l'article 76 CBE:
**02701384.6 / 1 386 230**

(71) Demandeur: **International Business Machines Corporation**
**Armonk, NY 10504 (US)**

(72) Inventeur: **Vertes, Marc**
**31470 Saint Lys (FR)**

(74) Mandataire: **Gasri-Hnich, Naïma**
**IBM France**
**Intellectual Property Department**
**Le Plan du Bois**
**06610 La Gaude (FR)**

Remarques:
This application was filed on 31-01-2008 as a divisional application to the application mentioned under INID code 62.

(54) **Procédé et système pour gérer des exécutables à bibliothèques partagées**

(57) L'invention propose un procédé et un système pour modifier de manière non intrusive l'exécution d'un fichier exécutable (E) comprenant des symboles (F1, F2, F3) référençant des fonctions disposées dans une bibliothèque partagée (B2) au sein d'un ordinateur, caractérisé en ce que ladite bibliothèque partagée comprend au moins une pseudo-fonction locale capable de simuler la présence d'une fonction dans la bibliothèque partagée, ladite pseudo-fonction pointant en fait vers une adresse disposée dans une table intermédiaire (TR), et en ce que le procédé comprend en outre le chargement d'un module de gestion (MG) pour la gestion de la bibliothèque partagée, le module de gestion étant apte à modifier, au cours de l'exécution du fichier exécutable, dans la table intermédiaire, l'adresse d'une fonction donnée de sorte que le prochain appel à cette fonction donnée permet l'exécution d'une fonction correspondant à la nouvelle adresse.

**FIGURE 5**

## Description

La présente invention concerne un procédé et un système pour gérer des fichiers exécutables utilisant des bibliothèques partagées.

D'une façon générale, pour éviter des fichiers exécutables de grande capacité, on rassemble dans un fichier distinct l'ensemble de fonctions communes à ces fichiers exécutables. Ce fichier distinct ou bibliothèque partagée est habituellement intégré dans des systèmes d'exploitation. Ainsi, les codes objets définissant une fonction ne sont plus intégrés dans des fichiers exécutables, seule la référence à cette fonction est indiquée dans les fichiers exécutables.

Un fichier exécutable utilisant au moins une bibliothèque partagée, ou fichier exécutable dynamique, fait donc appel à des fonctions d'usage commun contenues dans la bibliothèque partagée. Si l'on désire modifier même une partie mineure du fichier exécutable, on est obligé d'effectuer la modification sur l'ensemble du code source du fichier exécutable, puis de réaliser à nouveau une phase de compilation de ce code source. Cependant, le code source d'un fichier exécutable n'est pas toujours disponible.

L'édition de lien dynamique qui fait partie de l'art antérieur comprend une première étape pour créer un lien entre une fonction appelée et une table contenant un pointeur vers un code dans une bibliothèque de code et une autre étape pour l'appel à cette bibliothèque le chargement du code seulement au moment de l'exécution. Sur le même principe l'invention décrite dans le brevet américain US 5546586 de la société Apple Computer permet lorsque le code applicatif à exécuter est écrit en mémoire morte (ROM) de pouvoir maintenir le code des fonctions en stockant ce code dans une bibliothèque se trouvant dans mémoire vive (RAM) seulement sans avoir besoin de modifier le code applicatif. Il est cependant souhaitable de pouvoir modifier le code des fonctions non seulement au chargement du programme mais aussi pendant toute l'exécution du programme.

Le brevet américain US 6154878 de la société Hewlett-Packard décrit un système pour changer la version d'une bibliothèque utilisée par un programme applicatif et ce pendant son exécution. La solution consiste à compiler et faire l'édition de lien avec le programme d'un Proxy qui modifie l'appel à une fonction dans une bibliothèque de fonctions en un appel dans une bibliothèque d'interface qui appellera elle-même une version de la bibliothèque de fonction. Un programme de contrôle permet de définir dans la bibliothèque d'interface la version de la bibliothèque de fonction qui doit être appelée pendant l'exécution du programme d'application. Cette invention permet d'échapper à la contrainte de l'édition de lien définissant une bibliothèque qui sera la bibliothèque où à l'exécution le code objet des fonctions sera récupéré. Cette solution qui permet de changer de bibliothèque ne permet pas de changer de code de fonction; de plus, cette solution impose une compilation et une édition de lien du Proxy avec le programme applicatif.

Le but de l'invention est de permettre une modification dynamique du comportement d'un fichier exécutable dynamique de manière non intrusive, c'est à dire sans modification physique du fichier d'exécutable et d'éventuelles bibliothèques partagées.

La présente invention a également pour but d'étendre, de manière dynamique et non intrusive, les capacités des fichiers exécutables existants durant leur exécution.

On atteint les objectifs ci-avant avec un procédé selon l'une des revendications 1 à 10 permettant de modifier de manière non intrusive un fichier exécutable.

Une référence est considérée non résolue lorsque le code objet de la fonction à laquelle elle renvoie n'est pas inclus dans le fichier exécutable.

Un fichier de services est un fichier renfermant de nouveaux services ou fonctions que l'on souhaite adjoindre au fichier exécutable. Le fichier de références comprend une partie des références présentes dans le fichier exécutable. D'une façon conventionnelle, ces références ont pour but l'exécution des fonctions de la bibliothèque partagée. Mais avec le procédé selon l'invention, avant de faire le lien entre chaque référence du fichier exécutable et une fonction correspondante dans la bibliothèque partagée, on vérifie d'abord si cette fonction est référencée dans le fichier de références. Dans l'affirmatif, on dit que le fichier de références a intercepté cette fonction correspondante et on réalise alors un lien entre cette référence et le fichier des références. Dans le cas contraire, c'est-à-dire la fonction n'est pas référencée dans le fichier de références, on effectue de façon conventionnelle un lien dynamique entre le fichier exécutable et la fonction correspondante dans la bibliothèque partagée.

Lorsqu'une fonction est interceptée, le fichier de référence comprend une référence à cette fonction, et on associe une ou plusieurs fonctions nouvelles à cette référence. En d'autres termes, à chaque référence du fichier de références est associé un chemin d'accès vers une nouvelle fonction. Cette nouvelle fonction peut être une fonction (ou service) présente dans le fichier de services. Par ailleurs, le chemin d'accès défini dans le fichier de référence peut en outre permettre l'exécution d'une fonction de la bibliothèque partagée. Le fait d'intercepter une fonction permet donc de substituer cette fonction originale soit par de nouvelles fonctions, soit par une combinaison de fonctions comprenant ou non la fonction originale stockée dans la bibliothèque partagée.

Les fichiers exécutables sont désormais mutables, sans qu'il soit nécessaire de les régénérer. Des services peuvent être insérés, supprimés, ou modifiés en cours d'exécution.

Le fichier de référence se sert des fonctions d'édition dynamique de liens du système d'exploitation de l'ordinateur pour modifier les fichiers exécutables et activer ou désactiver des services.

Selon l'état de la technique, le processus d'édition dynamique de liens est normalement activé uniquement au chargement du fichier exécutable, avant son lancement. Avec le procédé selon l'invention, ce processus est accessible pendant toute la durée d'exécution du fichier exécutable.

On dit que le fichier de références est réentrant car une même fonction peut être altérée par plusieurs services, l'ordre d'exécution de ces services étant défini par ce fichier de références.

L'invention permet également d'agir sur une table d'adresses préexistantes. En effet les bibliothèques partagées comportant des fonctions exportées sont dotées de table de relocation et dans l'art antérieur, ces tables sont statiques. En modifiant la table de relocation, on modifie le graphe d'appel.

Avantageusement, on peut mémoriser l'ensemble des modifications subies par la table de relocation de façon à rendre le processus des modifications réversible.

De préférence, le module de gestion étant doté d'un langage de commande, on peut modifier de façon dynamique la table de relocation.

Pour charger le module de gestion dans le fichier exécutable, on peut pré-charger le module de gestion sous forme de bibliothèque partagée au démarrage du fichier exécutable. Autrement, on peut aussi interrompre le fichier exécutable en cours d'exécution au moyen d'un module de supervision, ce module de supervision étant externe au fichier exécutable et apte à commander le module de gestion; insérer un point d'arrêt dans le fichier exécutable à l'instruction courante; et charger le module de gestion dans le fichier exécutable. Le module de gestion est traité comme une bibliothèque partagée.

Selon une caractéristique avantageuse de l'invention, on transmet au module de gestion des commandes de modification de la table de relocation au moyen du module de supervision qui est doté de moyen d'appel du module de gestion.

Ainsi, les nouvelles fonctions peuvent ne pas être prédéterminées. Elles peuvent se trouver prédéfinies dans un fichier de service ou être crée alors que le fichier exécutable est en cours d'exécution.

Selon l'invention, on peut retirer le module de gestion du fichier exécutable en cours d'exécution à l'aide de moyens de libération contenus dans le module de supervision.

Selon le mode de mise en oeuvre dans lequel le système d'exploitation de l'ordinateur charge à la volée en cours d'exécution une nouvelle bibliothèque partagée comportant des fonctions exportées, les adresses de ces fonctions exportées étant stockées dans des variables locales arbitraires du fichier exécutable, on interpose le fichier de référence entre les variables locales et les fonctions exportées susceptibles d'être appelées par le fichier exécutable, le fichier de référence comportant par défaut les adresses de ces fonctions exportées. Le fichier de référence est tel qu'il peut être modifié au moyen d'un module de gestion. Ce fichier de référence est donc placé à un endroit accessible par le module de gestion contrairement aux variables locales.

Selon un autre aspect de l'invention, il est proposé un système selon la revendication 11 pour modifier de manière non intrusive un fichier exécutable.

D'autres avantages et caractéristiques de l'invention apparaîtront à l'examen de la description détaillée d'un mode de mise en oeuvre nullement limitatif, et des dessins annexés sur lesquels :

- la figure 1 est un schéma simplifié illustrant l'organisation physique d'un fichier exécutable utilisant une bibliothèque partagée selon l'art antérieur;
- la figure 2 est un schéma simplifié illustrant l'organisation physique d'un fichier exécutable utilisant plusieurs bibliothèques partagées selon la présente invention;
- la figure 3 est un organigramme comprenant différentes étapes d'un procédé selon l'invention;
- la figure 4 est un schéma simplifié illustrant l'organisation physique d'un fichier exécutable utilisant une bibliothèque partagée dotée d'un moyen de re-direction vers des fonctions exportées;
- la figure 5 reprend les éléments de la figure 4 dans le cas où il y a eu remplacement d'une fonction exportée selon le second mode de mise en oeuvre de la présente invention; et
- la figure 6 est un schéma simplifié illustrant un troisième mode de mise en oeuvre de l'invention dans le cas d'une bibliothèque partagée chargée en cours d'exécution par le système d'exploitation de l'ordinateur.

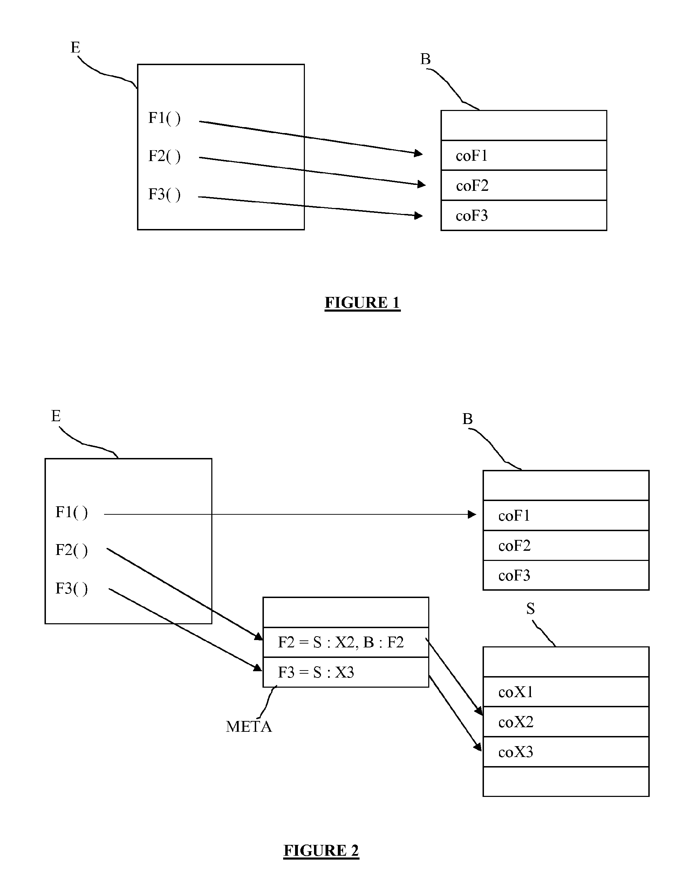

Sur la figure 1 est représentée une organisation physique d'un fichier exécutable dynamique E utilisant une bibliothèque partagée B selon l'art antérieur. Le fichier exécutable E est un programme sous forme de code objet dans lequel sont spécifiés des symboles F1, F2 et F3. Ces symboles sont des références à des fonctions F1, F2 et F3 d'usage commun dont les codes objets coF1, coF2 et coF3 sont stockés dans la bibliothèque partagée B. Cette bibliothèque est un fichier séparé non concaténé au programme E. Avant l'exécution des premières instructions codées dans le programme E, une phase de résolution des références aux symboles est effectuée à chaque chargement en mémoire du programme E par un programme d'amorçage (ou bootloader en langue anglaise). Cette phase de résolution des références fait partie d'une phase d'édition de liens qui a pour but de lier chaque référence Fi du programme E à son code objet stocké dans la bibliothèque B.

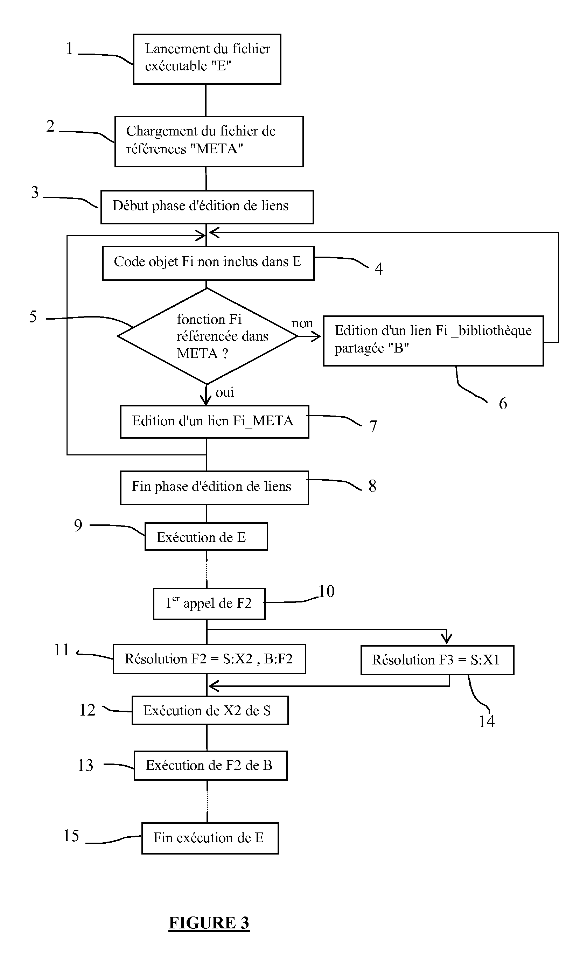

La figure 2 illustre un système selon l'invention dans lequel on retrouve les éléments de la figure 1. La figure 3 décrit différentes étapes d'un procédé selon l'invention.

On va maintenant décrire un mode de mise en oeuvre de l'invention en référence aux figures 2 et 3.

On voit sur la figure 2, deux nouveaux fichiers par rapport à la figure 1. On distingue un fichier de références META qui est une bibliothèque partagée spécifique comportant les références F2 et F3. On distingue également le fichier de services S qui est une bibliothèque partagée spécifique comportant des codes objets coX1, coX2 et coX3 des nouvelles fonctions ou services X1, X2 et X3. On désire modifier l'exécution du programme E en intégrant quelques nouvelles fonctions Xi sans pour cela modifier physiquement le fichier exécutable E et la bibliothèque B.

Dans le fichier META, à chaque référence est associée une équation telle que :

$$F2 = S : X2, B : F2$$

et

$$F3 = S : X3$$

L'équation associée à F2 signifie que l'on remplace l'exécution de la fonction F2 par l'exécution de la fonction X2 stockée dans le fichier S puis par l'exécution de la fonction F2 stockée dans la bibliothèque partagée B.

L'équation associée à F3 signifie que l'on remplace l'exécution de la fonction F3 par l'exécution de la fonction X3 stockée dans le fichier S.

Lors du lancement du programme E à l'étape 1, le système d'exploitation dans lequel opère l'invention est instruit de pré-charger le fichier META à l'étape 2 avant exécution des premières instructions codées dans E. Par exemple, ceci est obtenu sur le système LINUX en positionnant la variable d'environnement "LD_PRELOAD".

Ensuite à l'étape 3 débute la phase d'édition dynamique de liens qui est effectuée par le programme d'amorçage (bootloader). On considère à l'étape 4 toutes les fonctions dont le code objet n'est pas inclus dans le fichier E, c'est-à-dire que le fichier E ne comprend que leurs références ou symboles, on dit alors que les symboles sont non résolus. Sur la figure 2, ces références sont F1, F2 et F3. Elles sont affectées en priorité à META de telle sorte qu'à l'étape 5 on vérifie d'abord si elles sont répertoriées dans le fichier META. Seules les références F2 et F3 sont répertoriées dans le fichier META. Dans ce cas, on édite à l'étape 7 un lien ente les références F1 et F2 du fichier exécutable E et les références F1 et F2 du fichier de références META. Par contre si une fonction n'est pas référencée dans le fichier META telle que la fonction F1, on édite à l'étape 6 un lien entre la référence F1 du fichier exécutable E et le code objet coF1 de la fonction F1, ce code objet coF1 étant stocké dans la bibliothèque partagée B.

Une fois la phase d'édition de liens terminée à l'étape 8, on débute réellement l'exécution du fichier E à l'étape 9. Lors de l'exécution de E, l'initialisation du fichier META est déclenchée par le premier appel à l'une des fonctions interceptées, en l'occurrence la fonction F2 à l'étape 10. Cette initialisation consiste à compléter la phase d'édition de liens des étapes comprises entre 3 et 8. Pour ce faire, on utilise les mêmes routines de manipulation des bibliothèques partagées que celles utilisées par le programme d'amorçage. Pour les deux fonctions F1 et F2, sont résolues :

- la référence de chaque fonction dans META vers le service à insérer; Sur la figure 2, F2 dans le fichier META doit pointer sur X2 dans le fichier de services S; F3 dans le fichier META doit pointer sur X3 dans le fichier de services S; En l'absence d'un service à insérer, la fonction est redirigée vers sa bibliothèque d'origine B;
- éventuellement, dans le fichier de services S, la ou les références vers des fonctions pré requises; Sur la figure 2 par exemple, la fonction x2 dans S rappelle la fonction F2 dans B; Cette action est très importante car elle permet d'établir un chaînage des services, et aussi de pouvoir développer des services incrémentaux.

Cette phase d'initialisation est réalisée aux étapes 11 et 14. Suite à cette initialisation de META, le graphe d'appel entre les fonctions est désormais établi, de sorte qu'on exécute ensuite la fonction X2 à l'étape 12 puis la fonction F2 à l'étape 13.

La capacité de pouvoir redéfinir le graphe d'appel des fonctions est mise en oeuvre au lancement du programme E, de manière à insérer des services sous forme de bibliothèque partagée, mais on peut aussi activer ces services tout au long de l'exécution de ce programme E, notamment au moyen d'un canal de commande dans le fichier META. L'ouverture de ce canal de commande peut être déclenchée suivant de multiples stratégies : à l'interception de fonctions dans META, sur signal, etc.

A titre d'exemple, on peut utiliser le fichier META pour spécifier un appel système de la façon suivante :

```
extern  int  open(const  char  *pathname, int flags, mode_t mode)
{
if (traceon && tracefile)
   fprintf(tracefile, "trace%s: %d: open(\"%s\", %o, %o)\n",
           INDEX, pid, pathname, flags, mode);
Return((*meta_open)(pathname, flags, mode));}
"
```

Dans l'exemple ci-dessus, la ligne en gras désigne l'appel à la fonction "open" sous-jacente. La variable "meta_open" est un pointeur sur la fonction originale, ou une routine implémentant un autre service de manière identique. Cette fonction, par exemple X2 définie dans S, peut être chargée par META pour une pluralité de fichiers exécutables, sans qu'il y ait besoin de les modifier.

Le fichier META est indépendant des programmes modifiés aussi bien que des services réalisés. Chaque service, sous forme de bibliothèque partagée, fournit au fichier META les données suivantes :

- la liste des fonctions que le fichier META doit intercepter, avec la correspondance de la fonction interne à appeler, par exemple sur la figure 2, l'appel de la fonction F2 dans E doit déclencher la fonction X2 dans S;
- la liste des fonctions externes (donc pouvant être interceptées) pré-requises pour la mise en oeuvre du service, c'est cette information qui permet au fichier META de réaliser le chaînage entre services et fonctions;
- la définition de chacune des fonctions de substitution à activer lors de l'interception, ainsi que des fonctions nouvelles variées; et
- la liste des fonctions nouvelles exportées par le service, dont peuvent se servir les services sous-jacents; par exemple, META exporte des fonctions d'ouverture du canal de commandes de manière à ce que les autres services puissent les utiliser sans avoir à les ré-implémenter.

La présente invention apporte une méthode alternative pour aborder simplement des problèmes généraux, tels que la tolérance aux pannes des applications, la migration des applications, le contrôle externe des entrées-sorties. Elle permet de rendre les fichiers exécutables mutables de façon non intrusive. Ainsi, dans un fichier exécutable dans un système selon l'invention, les fonctions mutables sont celles qui sont définies dans des bibliothèques partagées chargeables dynamiquement, que ce soient des appels systèmes, ou d'autres types de fonctions (mathématiques, ...).

Le procédé selon l'invention se sert des fonctions d'édition de liens dynamique du système d'exploitation afin de manipuler de façon non intrusive des fichiers exécutables et activer/désactiver des services, eux-mêmes sous forme de bibliothèques partagées. Les fonctions d'édition dynamique de liens sont avantageusement accessibles durant toute l'exécution du fichier exécutable. Enfin, le fichier de référence META est réentrant puisque une même fonction peut être altérée par plusieurs services. On peut par ailleurs envisager la conception de plusieurs fichiers de références de type META et plusieurs fichiers de services S.

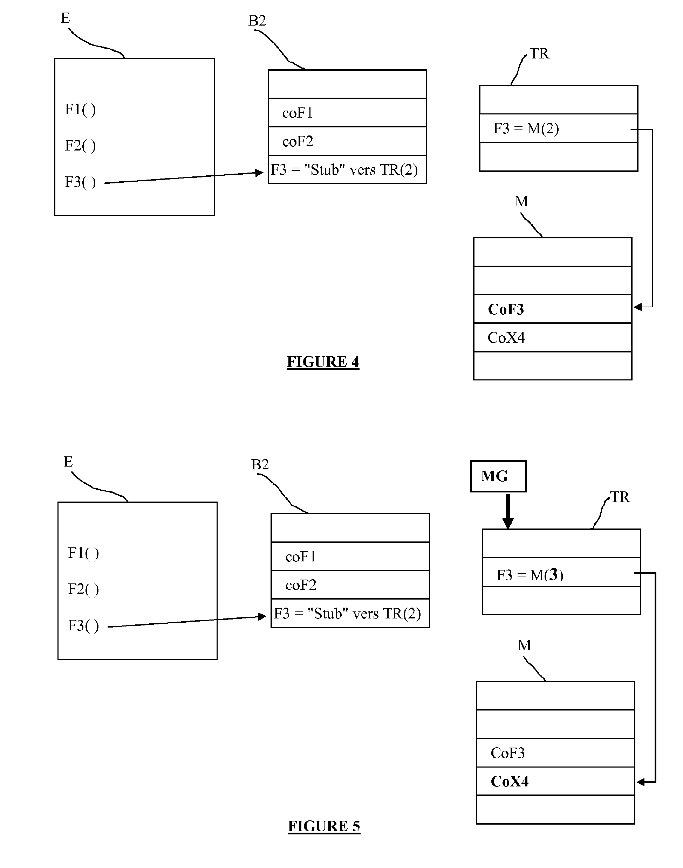

Sur la figure 4, on retrouve le fichier exécutable E. La bibliothèque B2 est telle qu'elle ne renferme pas le code objet de la fonction F3, elle renferme plutôt une application ou pseudo-fonction dite "Stub" permettant de simuler la présence de cette fonction F3 vis à vis du fichier exécutable E. En réalité, l'application "Stub" pointe sur une adresse TR(2) localisée dans une table de relocation TR, qui pointe à son tour sur une adresse M(2) dans un emplacement M là où se trouve effectivement le code objet coF3 de la fonction F3. Ce qui est remarquable c'est que la table de relocation TR est accessible par tout module externe au fichier exécutable. L'invention utilise un module de gestion MG qui est un agent ou une application dotée d'une intelligence pour modifier les adresses contenues dans la table de relocation. Sur la figure 5, via le module de gestion MG, on remplace dans la table de relocation l'adresse M(2) par l'adresse M(3). Entre temps, on a disposé dans M(3) un code objet coX4 d'une nouvelle fonction X4. Ainsi lorsque le fichier exécutable appel la fonction F3, c'est le code objet coX4 de la fonction X4 qui sera traité. Le module de gestion comprend également des moyens pour mémoriser ce remplacement de sorte qu'il est possible de revenir sur l'état initiale, c'est à dire M(2) dans la table de relocation TR.

Le module de gestion est accompagné d'un module de supervision qui permet de recevoir des commandes venant d'un utilisateur, les interpréter en langage compréhensible par le module de gestion, puis activer ces commandes.

En d'autres termes, dans le second mode de mise en oeuvre de l'invention, on considère un fichier exécutable ou un programme dans lequel est invoquée une fonction dont la définition est stockée dans une bibliothèque partagée externe. Pour toute fonction externe à un objet dynamique (programme ou bibliothèque partagée) dont l'utilisation par l'objet dynamique est explicite, il existe une pseudo-fonction locale à l'objet (appelée "stub"), générée lors de la phase préliminaire d'édition de liens par le programme d'édition de liens (LD sous LINUX). Pour la bibliothèque partagée, le but du "stub" est de masquer le fait que le code objet de la fonction est en réalité non locale à la bibliothèque. Qui plus est, ce code objet peut être situé à une adresse inconnue au moment de la génération de la bibliothèque partagée. A l'exécution du programme, cette pseudo-fonction invoque le véritable code objet en établissant un chemin d'accès jusqu'à ce code objet. Ce chemin d'accès est établi au moment de l'édition de liens dynamiques et consiste à stocker l'adresse du code objet dans une zone appelée table de relocation, située dans le segment DATA de l'objet dynamique. Avantageusement, ce segment DATA est modifiable.

Le second mode de mise en oeuvre du procédé consiste à pouvoir modifier l'adresse d'une fonction externe dans la table de relocation de la bibliothèque partagée, lors d'une phase ultérieure à l'édition de liens dynamique, et ce de manière arbitraire au cours de l'exécution du programme. Pour ce faire, on substitue la définition d'une fonction par une autre. Une propriété intéressante de ce procédé est qu'il permet de modifier la référence à une fonction même lorsque le programme a été interrompu durant l'exécution. En effet, les fonctions elles-mêmes n'étant pas modifiées, mais uniquement leur adresse d'indirection, l'occurrence précédente de la fonction termine son déroulement normalement, la modification n'étant prise en compte qu'à la prochaine invocation de la fonction.

Le module de gestion selon l'invention comporte notamment les fonctions suivantes :

- une fonction d'introspection capable de déterminer une fois chargée dans un programme:

   ■ la liste des objets dynamiques de ce programme (exécutable partiel et bibliothèques partagées) ainsi que leurs adresses respectives de chargement,
   ■ pour chaque objet dynamique, la liste des fonctions externes importées, c'est-à-dire pour lesquelles il existe une entrée dans la table de relocation susceptible d'être modifiée ultérieurement,
   ■ pour chaque objet dynamique, la liste des fonctions exportées, c'est-à-dire dont l'adresse de définition apparaît éventuellement dans une table de relocation d'un autre objet dynamique du même programme,

- une fonction de modification de la table de relocation, capable d'une part d'effectuer la modification d'adresse d'une fonction externe à la bibliothèque, et d'autre part de mémoriser les mises à jour successives afin de pouvoir éventuellement les annuler, et obtenir une réversibilité complète du système,
- une fonction de chargement du module, consistant en l'insertion d'un canal de commande permettant son chargement depuis un module de supervision, puis son activation, selon les méthodes suivantes :

   ■ soit au démarrage du programme, par un préchargement du module de gestion lui-même sous forme de bibliothèque partagée,
   ■ soit au cours de l'exécution du programme, par interruption du programme, insertion d'un point d'arrêt dans le programme à l'instruction courante via le système d'exploitation, et la mise en oeuvre du chargement du module de gestion.

- une fonction de libération du module, permettant au module de se retirer du programme en cours d'exécution.

D'autre part, il existe, pour les programmes dynamiques, une autre possibilité d'invoquer des fonctions externes : le programme peut accéder au cours de son exécution à des fonctions fournies par le système d'exploitation permettant de charger à la volée (en cours d'exécution) une nouvelle bibliothèque partagée (fonction "DLOPEN" sous LINUX), puis d'accéder aux fonctions exportées par cette bibliothèque en obtenant leurs adresses (fonction "DLSYM" sous LINUX) et en stockant celles-ci directement dans des variables locales arbitraires et non plus dans une table de relocation comme décrit précédemment. A priori, ces variables locales sont inconnues et inaccessibles depuis un module externe.

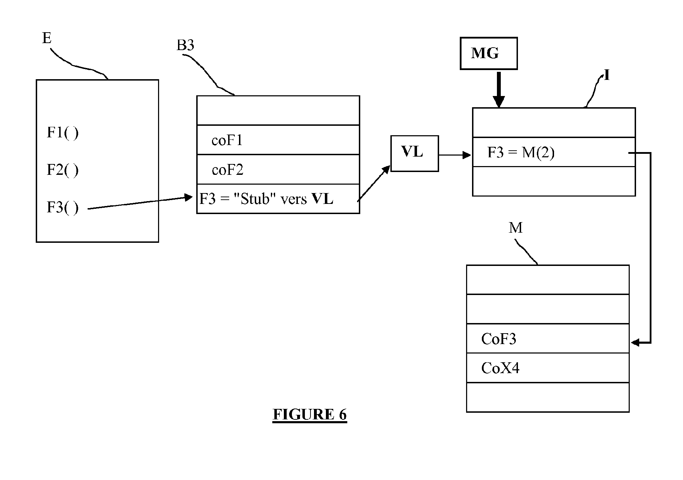

Sur la figure 6, on voit une bibliothèque partagée B3 qui est une bibliothèque chargée par le système d'exploitation. Selon l'art antérieur, les adresses des fonctions exportées sont normalement disposées dans des variables locales VL et ces variables locales ne sont pas disponibles.

Selon l'invention, on considère une application (fonction "DLSYM" sous LINUX) du système d'exploitation, cette application permet normalement d'accéder à l'adresse M(2) du code objet de la fonction exportée F3 de la bibliothèque partagée B3. On modifie alors cette application de manière à ce qu'elle retourne non plus l'adresse M(2) du code objet de la de la fonction F3, mais l'adresse d'une table d'interposition I générée par le module de gestion MG. Cette table d'interposition (à l'adresse correspondant à F3) pointe par défaut sur le code objet coF3 de la fonction exportée F3 dans M. L'avantage est que la table d'interposition est modifiable via le module de gestion MG.

Le procédé selon l'invention s'applique à une application cible, pour laquelle on désire pouvoir modifier dynamiquement le fonctionnement. Dans ces second et troisième mode, ce procédé fait notamment intervenir les éléments suivants pour sa mise en oeuvre :

- un module de gestion sous forme de bibliothèque partagée, doté d'un langage de commande permettant le changement dynamique du graphe d'appel des fonctions. Ces commandes peuvent par exemple être : "remplacer fonction1 définie dans bibliothèque 1 par fonction2 définie dans bibliothèque2"; "annuler le remplacement" ; "lister les fonctions remplacées" ; "lister les nouvelles fonctions" ; ... Suite à une commande de remplacement par exemple, tout appel de fonction1 se traduira par l'invocation de fonction2 en lieu et place de fonction1. Ces modifications sont persistantes jusqu'à la fin du programme. Elles ne sont pas définitives de sorte qu'un programme se relance dans sa configuration par défaut.
- un module de supervision sous forme de programme externe permettant de :

   ■ charger le module de gestion dans un programme en cours d'exécution par insertion d'un point d'arrêt et invocation de la fonction de chargement du module de gestion sous forme d'une bibliothèque partagée : "dlopen ("mg.so")" sous LINUX; la technique mise en oeuvre est similaire à celle utilisée par les débogueurs;
   ■ dialoguer avec le programme (fichier exécutable) via un canal de commande afin de manipuler le graphe d'appel de ce programme; les commandes peuvent être activées par une interface graphique, ou par ligne de commande, ou bien par des fonctions embarquées dans tous autres programmes;

- en dehors de la capacité de modification du graphe d'appel, le programme externe n'est pas obligatoire au bon fonctionnement de l'application.

A titre d'exemples non limitatifs, la présente invention peut être mise en oeuvre dans les applications suivantes :

Instrumentation dynamique et de manière réversible des systèmes d'informations déployés et opérationnels, par insertion de sondes de mesure de performance, lors de campagne de tests. Ces opérations sont en principe impossible avec les techniques actuelles d'instrumentations, qui sont irréversibles, et dont le coût d'opération n'est pas compatible avec le déploiement opérationnel.

Maintenance évolutive et correctrice sur des programmes en cours de fonctionnement, en remplaçant dynamiquement une fonction par une nouvelle version corrigeant des bugs, ou introduisant de nouvelles fonctionnalités. Les techniques actuelles nécessitent aujourd'hui l'arrêt complet, le remplacement et le redémarrage des programmes.

Implémentation des fonctionnalités systèmes de manière non intrusive à la fois pour les applications et pour le système d'exploitation, par exemple en substituant les fonctions systèmes capable de rediriger les traitements sur une autre machine en cas de panne. Les techniques actuelles ne permettent pas ces évolutions sans toucher au coeur du système, ou sans réécrire des applications spécifiques.

Intégration des applications hétérogènes de manière non intrusive, en développant des connecteurs et des filtres de conversion, et en étant capable de les insérer de manière opportune sans réécrire l'application, par substitution sur les interfaces existantes.

Bien sûr, l'invention n'est pas limitée aux exemples qui viennent d'être décrits et de nombreux aménagements peuvent être apportés à ces exemples sans sortir du cadre de l'invention.

Le texte de la demande de brevet européen numéro 02701384.6 déposée le 01 février 2002 est incorporé ici par référence, pour les éléments qui ne figureraient pas dans la présente demande.

**Revendications**

1. Procédé pour modifier de manière non intrusive l'exécution d'un fichier exécutable comprenant des symboles (F1, F2, F3) référençant des fonctions disposées dans une bibliothèque partagée (B2) au sein d'un ordinateur, **caractérisé en ce que** ladite bibliothèque partagée comprend au moins une pseudo-fonction locale capable de simuler la présence d'une fonction dans la bibliothèque partagée, ladite pseudo-fonction pointant en fait vers une adresse disposée dans une table intermédiaire (TR, I), et **en ce que** le procédé comprend en outre le chargement d'un module de gestion (MG) pour la gestion de la bibliothèque partagée, le module de gestion étant apte à modifier, au cours de l'exécution du fichier exécutable, dans la table intermédiaire, l'adresse d'une fonction donnée de sorte que le prochain appel à cette fonction donnée permet l'exécution d'une fonction correspondant à la nouvelle adresse.

2. Procédé selon la revendication 1, **caractérisé en ce que** le module de gestion (MG) est doté d'un langage de commande pour modifier dynamiquement l'adresse des fonctions dans la bibliothèque partagée.

3. Procédé selon l'une des revendications 1 et 2, **caractérisé en ce que** le module de gestion (MG) est chargé par un module de supervision externe au fichier exécutable et apte à commander le module de gestion, le module de supervision étant en outre capable à dialoguer avec le fichier exécutable via un canal de commande.

**4.** Procédé selon la revendication 3, **caractérisé en ce qu'**on transmet au module de gestion (MG) des commandes de modification de la table de intermédiaire au moyen du module de supervision qui est doté de moyens d'appel du module de gestion.

**5.** Procédé selon l'une des revendications 3 et 4, **caractérisé en ce qu'**on retire le module de gestion (MG) du fichier exécutable en cours d'exécution à l'aide de moyens de libération prévus dans le module de supervision.

**6.** Procédé selon l'une quelconque des revendications précédentes, **caractérisé en ce que**, pour charger le module de gestion dans le fichier exécutable, on précharge le module de gestion (MG) sous forme de bibliothèque partagée au démarrage du fichier exécutable.

**7.** Procédé selon l'une quelconque des revendications 1 à 5, **caractérisé en ce que** pour charger le module de gestion dans le fichier exécutable :

- on interrompt le fichier exécutable en cours d'exécution,
- on insère un point d'arrêt dans le fichier exécutable à l'instruction courante; et
- on charge le module de gestion dans le fichier exécutable.

**8.** Procédé selon l'une des revendications précédentes, **caractérisé en ce que** la table intermédiaire est une table de relocation (TR), ladite pseudo-fonction pointant directement une adresse disposée dans ladite table de relocation (TR), et **en ce que** le module de gestion met en oeuvre les étapes suivantes :

- déterminer, au sein du fichier exécutable, la liste des objets dynamiques ainsi que leurs adresses respectives de chargement et pour chaque objet dynamique, la liste des fonctions externes importées ainsi que la liste des fonctions exportées; et
- modifier, en cours d'exécution du fichier exécutable, dans ladite table de relocation, l'adresse d'une fonction donnée de sorte que le prochain appel à cette fonction donnée permet l'exécution d'une fonction correspondant à la nouvelle adresse.

**9.** Procédé selon la revendication 8, **caractérisé en ce que** le module de gestion comprend en outre la mémorisation de l'ensemble des modifications subies par ladite table de relocation de façon à rendre le processus des modifications réversible.

**10.** Procédé selon l'une des revendications 1 à 7, **caractérisé en ce que** la bibliothèque partagée est chargée à la volée en cours d'exécution par le système d'exploitation de l'ordinateur et **en ce que** les pseudo-fonctions sont associées à des fonctions exportées dont les adresses sont stockées dans des variables locales arbitraires (VL) du fichier exécutable (E), la table intermédiaire (I) étant interposée entre les variables locales et les fonctions exportées susceptibles d'être appelées par le fichier exécutable et comportant par défaut les adresses de ces fonctions exportées.

**11.** Système comprenant des moyens adaptés pour mettre en oeuvre le procédé selon l'une des revendications 1 à 10.

E

B

F1( )

F2( )

F3( )

coF1

coF2

coF3

**FIGURE 1**

E

B

F1( )

F2( )

F3( )

coF1

coF2

coF3

S

F2 = S : X2, B : F2

F3 = S : X3

META

coX1

coX2

coX3

**FIGURE 2**

```
  1 ──────┐  Lancement du fichier
          │  exécutable "E"

  2 ────┐  Chargement du fichier de
        │  références "META"

  3 ──────┐  Début phase d'édition de liens

              ┌──────────────────────────────────────────────┐
              ▼ ►◄                                            │
           Code objet Fi non inclus dans E  ──── 4            │
                                                              │
              ◇ fonction Fi        non                        │
  5 ───────  ◇ référencée dans  ──────►  Edition d'un lien Fi _bibliothèque
              ◇ META ?                    partagée "B"        │
                                                              │
                   │ oui                          └──── 6     │
                   ▼                                          │
           Edition d'un lien Fi_META  ──── 7 ─────────────────┘

           Fin phase d'édition de liens  ──── 8

  9 ──────┐  Exécution de E

           1ᵉʳ appel de F2  ──── 10

 11 ──  Résolution F2 = S:X2 , B:F2        Résolution F3 = S:X1

 12 ──  Exécution de X2 de S                        └──── 14

 13 ──  Exécution de F2 de B

 15 ──  Fin exécution de E
```

**FIGURE 3**

E

B2

TR

| |
|---|
| coF1 |
| coF2 |
| F3 = "Stub" vers TR(2) |

| |
|---|
| F3 = M(2) |
| |

F1( )

F2( )

F3( )

M

| |
|---|
| |
| CoF3 |
| CoX4 |
| |

**FIGURE 4**

E

B2

MG

TR

| |
|---|
| coF1 |
| coF2 |
| F3 = "Stub" vers TR(2) |

| |
|---|
| F3 = M(**3**) |
| |

F1( )

F2( )

F3( )

M

| |
|---|
| |
| CoF3 |
| **CoX4** |
| |

**FIGURE 5**

E

B3

MG

I

F1( )

F2( )

F3( )

coF1

coF2

F3 = "Stub" vers **VL**

**VL**

F3 = M(2)

M

CoF3

CoX4

**FIGURE 6**

**Office européen des brevets**

**RAPPORT DE RECHERCHE EUROPEENNE**

Numéro de la demande

EP 08 15 0861

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 6 154 878 A (SABOFF MICHAEL L) 28 novembre 2000 (2000-11-28) <br> * colonne 5, ligne 11 - ligne 46 * <br> * colonne 6, ligne 38 - ligne 66 * <br> * colonne 14, ligne 21 - ligne 53 * <br> * colonne 16, ligne 62 - colonne 17, ligne 34 * <br> * figure 17 * <br> * figure 18 * <br> ----- | 1-11 | INV. G06F9/445 |
| A | SEGAL M: "ON-THE-FLY PROGRAM MODIFICATION: SYSTEMS FOR DYNAMIC UPDATING" IEEE SOFTWARE, IEEE COMPUTER SOCIETY. LOS ALAMITOS, US, vol. 10, no. 2, mars 1993 (1993-03), pages 53-65, XP000913803 ISSN: 0740-7459 page 60, rubrique "Dynamic Modification System" ----- | 1-11 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| Munich | 12 mars 2008 | Ebert, Werner |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 0861

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2008

| Document brevet cité au rapport de recherche | Date de publication | Membre(s) de la famille de brevet(s) | Date de publication |
|---|---|---|---|
| US 6154878 A | 28-11-2000 | AUCUN | |

EPO FORM P0460

Pour tout renseignement concernant cette annexe : voir Journal Officiel de l'Office européen des brevets, No.12/82

**EP 1 914 630 A1**

## RÉFÉRENCES CITÉES DANS LA DESCRIPTION

**Documents brevets cités dans la description**

- US 5546586 A
- US 6154878 A
- EP 02701384 A